# EUROPÄISCHE PATENTANMELDUNG

(11) **EP 0 936 815 A2**
(43) Veröffentlichungstag der Anmeldung: **18.08.1999**
(21) Anmeldenummer: 99102329.2
(22) Anmeldetag: 06.02.1999
(51) Int. Cl.: H04N 7/173, H04N 1/21

(54) **Virtuelle Audio- und/oder Videothek mit Fernzugriff**

(30) Priorität: 11.02.1998 DE 19805409
(71) Anmelder: GRUNDIG Aktiengesellschaft, 90762 Fürth (DE)
(72) Erfinder: Meisel, Siegfried, 90762 Fürth (DE); Schelenz, Martin, 90762 Fürth (DE)

(57) **Zusammenfassung**

Die Erfindung betrifft ein Verfahren zur Realisierung einer virtuellen Audio- und/oder Videothek, die im wesentlichen aus einem senderseitig angeordneten Speichermedium mit auf dem Speichermedium gespeicherten Audio- und/oder Videobeiträgen und aus einer Steuereinrichtung zur Steuerung des Zugriffs auf die gespeicherten Audio- und/oder Videobeiträge besteht. Senderseitig, d.h. vom Betreiber der virtuellen Audio- und/oder Videothek wird eine Programmangebotsauswahl an ein empfangsseitig angeordnetes Endgerät über einen Hinkanal übertragen. Mittels des Endgeräts wird über einen Rückkanal ein Identifikationscode zur Identifikation des Endgeräts und ein Programmauswahlcode zur Kennzeichnung eines empfangsseitig ausgewählten Audio- und/oder Videobeitrags an die senderseitig vorgesehene virtuelle Videothek übertragen. Die virtuelle Videothek überträgt im Ansprechen auf ein von einem Endgerät empfangenen Programmauswahlcode zur Kennzeichnung eines ausgewählten Audio- und/oder Videobeitrags über ein Übertragungsmedium den ausgewählten Audio- und/oder Videobeitrag in codierter Form als Nutzdaten an das Endgerät zusammen mit einem Kennungscode zur Kennzeichnung des Endgeräts, das den Audio-und/oder Videobeitrag angefordert hat. Der Kennungscode wird mit einem empfangsseitig gespeicherten Vergleichscode verglichen, wobei bei Übereinstimmung des Kennungscodes und des Vergleichscodes die Nutzdaten in einer empfangsseitig angeordneten Speichereinrichtung gespeichert werden. Der Teilnehmer kann somit den so gespeicherten Video- und/oder Audiobeitrag nach der Übertragung jederzeit über einen entsprechenden Decoder wiedergeben.

## Beschreibung

Die Erfindung betrifft ein Verfahren zur Realisierung einer virtuellen Audio- und/oder Videothek.

Die Erfindung betrifft weiter ein Kommunikationsendgerät zur Realisierung eines derartigen Verfahrens.

Benutzer heutiger Kommunikationsendgeräte, beispielsweise Fernsehgeräte mit entsprechenden Empfangseinrichtungen auch für Pay-TV, ist heutzutage mit einer großen Anzahl von Programmangeboten konfrontiert. Häufig zeigt sich, daß das Programmangebot der frei zugänglichen Programmanbieter nicht den Wunschvorstellungen des Benutzers entspricht. In diesem Fall hat der Benutzer die Möglichkeit, gegen einen monatlichen Beitrag auf Programmangebote von sogenannten Pay-TV-Kanälen zurückzugreifen. Nachteil bei der Teilnahme an diesen Kanälen ist, daß der Teilnehmer unabhängig von seinen Sehgewohnheiten die Pauschalgebühr bezahlen muß, unabhängig davon, ob er überhaupt nicht, viel oder wenig das Angebot des entsprechenden Programmanbieters nutzt. Als Alternative steht dem Konsumenten moderner Kommunikationsgeräte darüberhinaus eine Vielzahl von Videotheken zur Verfügung, in denen er sich gezielt bestimmte Programmangebote auswählen kann. Nachteil dieses Systems ist, daß der Konsument meist zu bestimmten Zeiten die Videotheken besuchen muß, was mit einem Aufwand an Fahrzeiten etc. verbunden ist.

Aus EP 0 396 062 A2 ist ein Fernsehübertragungssystem zur interaktiven Verteilung auswählbarer Videopräsentationen bekannt. Hierbei wird über einen Telefonanruf von einem Teilnehmerendgerät aus eine Zentralstation angesprochen, die an den Teilnehmer einen gewünschten Videobeitrag über einen Übertragungspfad eines Netzwerkes in codierter Form sendet.

Der Erfindung liegt die Aufgabe zugrunde, ein Verfahren zur Realisierung einer virtuellen Videothek anzugeben, das für den Benutzer in einfacher Weise handhabbar ist.

Diese Aufgabe wird durch ein Verfahren zur Realisierung einer virtuellen Audio- und/oder Videothek gelöst, die im wesentlichen aus einem senderseitig angeordneten Speichermedium mit auf dem Speichermedium gespeicherten Audio- und/oder Videobeiträgen und aus einer Steuereinrichtung zur Steuerung des Zugriffs auf die gespeicherten Audio- und/oder Videobeiträge besteht, bei dem senderseitig eine Programmangebotsauswahl über ein erstes Übertragungsmedium an ein empfangsseitig angeordnetes Endgerät über einen Hinkanal übertragen wird, bei dem mittels des Endgeräts über einen Rückkanal ein Identifikationscode zur Identifikation des Endgeräts und ein Programmauswahlcode zur Kennzeichnung eines empfangsseitig ausgewählten Audio- und/oder Videobeitrags an die senderseitig vorgesehene virtuelle Audio- und/oder Videothek übertragen wird, bei dem die Steuereinrichtung der virtuellen Videothek im Ansprechen auf ein von einem Endgerät empfangenen Programmauswahlcode zur Kennzeichnung eines ausgewählten Audio- und/oder Videobeitrags den ausgewählten Audio- und/oder Videobeitrag in codierter Form als Nutzdaten an das Endgerät zusammen mit einem Kennungscode zur Kennzeichnung des Endgeräts, das den Audio-und/oder Videobeitrag angefordert hat, übertragen wird, bei dem der Kennungscode mit einem empfangsseitig gespeicherten Vergleichscode verglichen wird und bei dem bei Übereinstimmung des Kennungscodes und des Vergleichscodes die Nutzdaten in einer empfangsseitig angeordneten Speichereinrichtung gespeichert werden.

Der Erfindung liegt die Erkenntnis zugrunde, daß die Akzeptanz bei der Bezahlung bestimmter nicht frei zugänglicher Audio- und/oder Videoprogrammbeiträge dadurch wesentlich erhöht werden kann, wenn der jeweilige Teilnehmer keine bzw. lediglich eine sehr geringe Teilnehmergrundgebühr entrichten muß und im übrigen lediglich die von ihm gewünschten Programmbeiträge bezahlen kann. Zusätzlich wird der zunehmend erkennbare bewußte Audio- und/oder Videokonsum auch eher dazu führen, daß gewünschte Programmbeiträge vorab ausgewählt werden und dann zu einem späteren Zeitpunkt betrachtet oder gehört werden. Mit Hilfe der Erfindung werden bekannte Komponenten aus der Kommunikationstechnik dahingehend miteinander verknüpft, daß der Teilnehmer der virtuellen Audio- und/oder Videothek bequem zuhause im Wohnzimmer die jeweils gewünschten Programmbeiträge auswählen kann und zu jedem beliebigen gewünschten Zeitpunkt, der jedoch vom Zeitpunkt der Programmauswahl eine bestimmte Zeitspanne entfernt sein sollte, betrachten kann. Hierzu wird vom Betreiber der virtuellen Audio- und/oder Videothek eine Programmangebotsauswahl, beispielsweise über einen frei zugänglichen Fernsehkanal oder über Internet, an ein empfangsseitig angeordnetes Endgerät übertragen. Zur Programmauswahl ist es für den Teilnehmer lediglich erforderlich, daß er beispielsweise mittels der Fernbedienung seines Fernsehgeräts und einer auf dem Bildschirm vorgesehenen Menüsteuerung einen bestimmten Programmbeitrag auswählt. Hierauf wird der diesem Programmbeitrag zugeordnete Programmauswahlcode gemeinsam mit einem Identifizierungscode zur Identifikation des Teilnehmers an die Audio- und/oder Videothek übertragen. Die senderseitig angeordnete Steuereinrichtung der Audio- und/oder Videothek überträgt hierauf an den Teilnehmer den Zeitpunkt, wann die Übertragung des Programmbeitrags erfolgen wird sowie die Kosten hierfür. Gleichzeitig wird die empfangsseitig vorgesehene Empfangs- und Speichereinrichtung derart programmiert, daß der ausgewählte Programbeitrag zu diesem Zeitpunkt empfangen und gespeichert werden kann. Die Übertragung des Programmbeitrags erfolgt beispielsweise über Satellit mittels eines codierten MPEG-Datenstroms. Neben den Voraussetzungen von seiten des Diensteanbieters der virtuellen Audio- und/oder Videothek ist empfängerseitig somit lediglich ein ohnehin vorhandenes Fernsehgerät mit Internetzugang sowie eine Set-Top-Box zum Empfang des digitalen Datenstroms erforderlich. An die Set-Top-Box ist eine Speichereinrichtung, beispielsweise eine Festplatte angeschlossen, die zur Speicherung der übertragenen Audio- und/oder Videodaten dient.

Eine weltweit nutzbare Kommunikation mit der Audio- und/oder Videothek kann auf einfache Weise dadurch erzielt werden, daß die Programmangebotsauswahl über Internet von der virtuellen Audio- und/oder Videothek als Hinkanal an die empfangsseitig angeordneten Endgeräte übertragen wird, und daß auch der Rückkanal zur Auswahl eines Audio- und/oder Videobeitrags über Internet vom Ort des Teilnehmers an die virtuelle Audio- und/oder Videothek übertragen wird.

Die Erfassung der von einem Teilnehmer ausgewählten Programmbeiträgen für eine zielgerichtete Übertragung und/oder für Abrechnungszwecke kann dadurch sichergestellt werden, daß bei einer Auswahl eines Audio- und/oder Videobeitrags die Teilnehmernummer und/oder eine dem Teilnehmer zugeordnete Identifikationsnummer an die virtuelle Audio- und/oder Videothek übertragen wird.

Wenn, wie im Falle von Internet möglich, sowohl ein Hin- als auch ein Rückkanal zwischen Teilnehmer und Audio- und/oder Videothek zur Verfügung steht, so kann die Nutzerfreundlichkeit dadurch weiter verbessert werden, daß die virtuelle Audio- und/oder Videothek dem Teilnehmer insbesondere nach erfolgter Auswahl eines Audio- und/oder Videobeitrags Zusatzinformationen übermittelt, die die Kosten des Teilnehmers und/oder die Zeit betreffen, wann der ausgewählte Audio- und/oder Videobeitrag zum Teilnehmer übertragen wird.

Eine schnelle und sichere Übertragung ausgewählter Programmbeiträge kann dadurch erzielt werden, daß die von der virtuellen Audio- und/oder Videothek übertragenen Audio- und/oder Videobeiträge als MPEG-Datenstrom an das Endgerät übertragen werden.

Ein energiesparender Betrieb der Endgeräte kann dadurch sichergestellt werden, daß über einen empfangsseitig vorgesehenen Timer die Empfangseinrichtung des Endgeräts nach Auswahl eines Audio- und/oder Videobeitrags für den Zeitpunkt der Übertragung des ausgewählten Audio- und/oder Videobeitrags auf Empfangsbereitschaff programmiert wird.

Im folgenden wird die Erfindung anhand der in den Figuren dargestellten Ausführungsbeispiele näher beschrieben:

Es zeigen:
- Fig. 1: ein erstes Ausführungsbeispiel eines Übertragungssystems zur Realisierung einer virtuellen Audio- und/oder Videothek,
- Fig. 2: ein Bildschirmmenue mit einer schematische Darstellung einer Programmauswahl der virtuellen Audio- und/oder Videothek,
- Fig.3: eine schematische Darstellung eines von einem Teilnehmer zur Videothek übertragenen Identifikationssignals mit Programmauswahlcode,
- Fig. 4: ein Blockschaltbild von Teilnehmerendgeräten zur Teilnahme an der virtuellen Audio- und/oder Videothek und
- Fig. 5: eine schematische Darstellung eines übertragenen Teilnehmersignals nach Programmauswahl und
- Fig. 6: ein Ausführungsbeispiel eines Signalverarbeitungsteils eines des Teilnehmerendgeräts, der zur Auswertung eines Identifikationscodes vorgesehen ist.

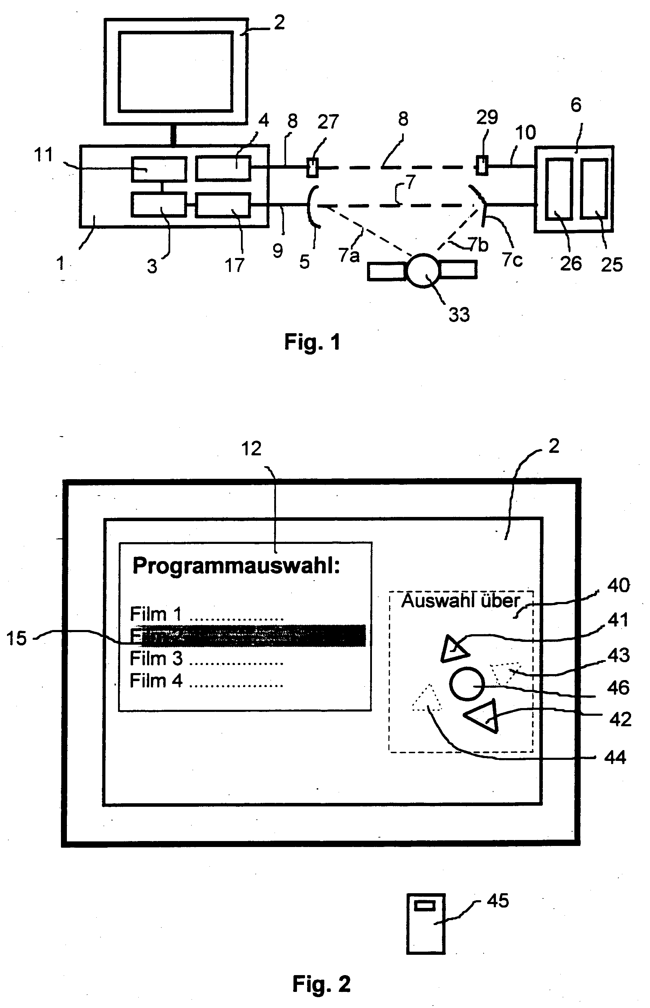

Fig. 1 zeigt ein Ausführungsbeispiel eines Übertragungssystems zur Realisierung einer virtuellen Audio- und/oder Videothek. Empfangsseitig ist hierzu ein Fernsehgerät 2 vorgesehen mit einer an das Fernsehgerät 2 verbundenen Empfangseinrichtung 1 beispielsweise einer sogenannten Set-Top-Box zum Empfang von digitalen Audio- und/oder Videosignalen. Die Empfangseinrichtung 1 weist einen Speicher 3 sowie eine Internet-Kommunikationseinrichtung 4 auf. Die Internet-Kommunikationseinrichtung 4 ist über eine Telefonleitung 8 an einen Telefonanschluß 27 gekoppelt, während die Speichereinrichtung 3 in der Lage ist, die von einem Tuner 17 empfangenen digitalen Signale zu speichern. Der Tuner 17 ist über eine Verbindungsleitung 9 mit einer Satellitenantenne 5 verbunden. Die Satellitenantenne 5 empfängt über eine Empfangsstrecke 7a, 7b sowie einen Satelliten 33 die von einer Antenne 7c der virtuellen Audio- und/oder Videothek 6 abgestrahlten Signale. Die virtuelle Audio- und/oder Videothek 6 besteht im wesentlichen aus einer Speichereinrichtung 25 mit zugeordneter Steuereinrichtung 26 und ist über eine Verbindungsleitung 29 mit der Telefonleitung 28 eines Telefonkommunikationsnetzes gekoppelt. Über eine Vebindungsleitung 10 besteht eine Kopplung zur Sendesatellitenantenne 7c. Als alternativer Übertragungsweg ist bei dem in Fig. 1 dargestellten Ausführungsbeispiel eine kabelgebundene Übertragungsstrecke 7 zwischen der virtuellen Audio- und/oder Videothek 6 und dem empfangsseitig angeordneten Empfangsgerät 1 gestrichelt eingezeichnet.

Der am Ort der Empfangseinrichtung 1 angeordnete Teilnehmer, der Kunde der virtuellen Audio- und/oder Videothek 6 ist, wählt sich über das Internet mittels seiner Internet-Kommunikationseinrichtung 4 auf eine Programmangebotsseite, auf der alle von der virtuellen Audio- und/oder Videothek 6 verfügbaren Filme, Musiktitel etc. aufgelistet sind. Mittels Cursorsteuerung durch seine Fernbedienung oder Infrarottastatur wählt er aus einem von ihm gewünschten Programmbeitrag aus. Dieser Programmauswahlwunsch wird in der virtuellen Audio- und/oder Videothek als Programmauswahlcode, beispielsweise zusammen mit einem Passwort, d.h. einem Identifikationscode zur Kennzeichnung des Empfangsgeräts bzw. des Teilnehmers gespeichert. Von Seiten des Betreibers d.h. von der virtuellen Audio- und/oder Videothek 6 werden dem Teilnehmer die Kosten sowie der Zeitpunkt der Übertragung etc. übermittelt. Für eine möglichst ökonomische Nutzung der Übertragungskapazität ist es sinnvoll, daß die Übertragung des gewünschten Audio- und/oder Videobeitrags nicht als sogenanntes Video-On-Demand ausschließlich für den anfordernden Teilnehmer übersendet wird, sondern daß das von der Audio- und/oder Videothek zur Auswahl gestellte Programmangebot fortlaufend über den Übertragungskanal 7, 7a, 7b in codierter Form verschlüsselt übertragen wird. Mit der Übermittlung des Zeitpunkts für die Übertragung wird die Empfangseinrichtung 1 auch dahingehend programmiert, daß die Empfangseinrichtung 17, d.h. der Tuner 17, sowie der Speicher 3 zum vereinbarten Zeitpunkt im Aufzeichnungsmodus versetzt werden. Sobald die gewünschten Audio- und/oder Videodaten in der Empfangseinrichtung 1 auf dem Speicher 3 gespeichert sind, kann der ausgewählte Beitrag vom Kunden jederzeit über das Fernsehgerät oder im Fall von Audiodaten über eine mit der Speichereinrichtung 3 gekoppelte Audioeinrichtung wiedergegeben werden. Insgesamt ergibt sich somit mit Hilfe der in Fig. 1 dargestellten virtuellen Audio- und/oder Videothek eine kostengünstige Realisierung, die es dem Teilnehmer ermöglicht, gewünschte Programmbeiträge zu erhalten, ohne daß er mit einem umständlichen aus realen Videotheken bekannten Ausleihen und der Rückgabe des Videofilms belastet ist.

Fig. 2 zeigt einen Bildschirm 2 mit einer schematischen Darstellung einer Programmauswahl 12 von der virtuellen Audio- und/oder Videothek angebotenen Programmbeiträge. Das in Fig. 2 dargestellte Bildschirmmenü dient der Programmauswahl eines Programmbeitrags der Audio- und/oder Videothek (vgl. Fig. 1). Die entsprechenden Daten, auf denen dieses Bildschirmmenü basiert, werden beispielsweise via Internet oder über ein Telefonmodem oder separat über einen DAB-Empfänger oder eine sonstige Empfangseinrichtung an das Fernsehgerät 2 übertragen. Die Auswahl eines bestimmten Programmbeitrags erfolgt derart, daß beispielsweise mittels eines Cursorkreuzes 40 auf einer Fernbedienung 45, welches zur Deutlichmachung in einem Bildschirmbereich auf dem Bildschirm 2 eingeblendet ist. Die Auswahl eines gewünschten Programmbeitrags erfolgt mit Hilfe der Cursorsteuerungstasten 41, 42, 43, 44 sowie mit Hilfe der Bestätigungstaste 46, wobei die jeweilige aktuelle Position des Cursors auf dem Bildschirm entsprechend farblich unterlegt ist, wie dies im Bereich 15 bei dem in Fig. 2 dargestellten Bildschirmausschnitt der Fall ist.

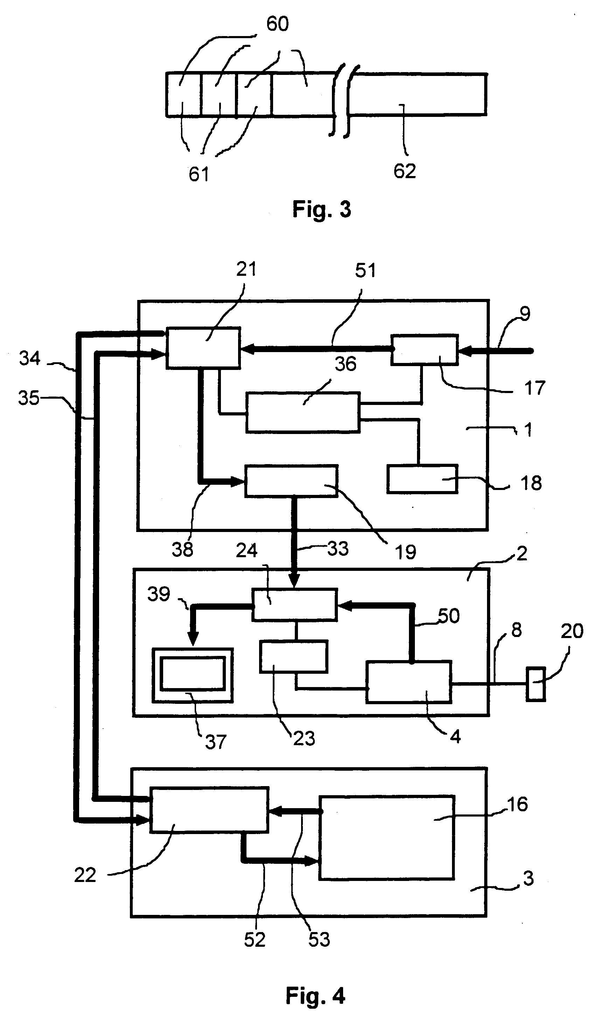

Fig. 3 zeigt eine schematische Darstellung eines von einem Teilnehmer zur virtuellen Videothek übertragenen Programmauswahlsignals 60. Das Programmauswahlsignal 60 besteht bei dem in Fig. 3 dargestellten Ausführungsbeispiel aus digitalen Informationen, wobei ein erster Bereich 61 des Programmauswahlsignals 60 einen Identifikationscode zur Identifikation des Teilnehmers enthält. Der mit 62 gekennzeichnete zweite Bereich des Programmauswahlsignals 60 enthält die Informationen des ausgewählten Programmbeitrags, der im folgenden auch als Programmauswahlcode 62 bezeichnet wird. Dieser repräsentiert den mit Hilfe des Bildschirmmenüs (vgl. Fig. 2) ausgewählten Programmbeitrag. Die Übertragung des in Fig. 3 dargestellten Programmauswahlsignals 60 erfolgt über Internet oder über ein mit der virtuellen Videothek koppelbares Telefonmodem.

Fig. 4 zeigt ein Blockschaltbild einer empfangsseitig angeordneten Kundenendgerätefiguration. Die in Fig. 4 dargestellte Vorrichtung weist eine Empfangseinrichtung, eine sogenannte Set-Top-Box 1 zum Empfang von digitalen Signalen 9 auf. Die Empfangseinrichtung 1 ist über eine Verbindungsleitung 33 mit einem Fernsehgerät 2 mit integrierter Internetkommunkationseinrichtung 4 gekoppelt. Die in Fig. 4 dargestellte Gerätekonfiguration weist darüberhinaus einen Speicher 3 auf. Die Empfangseinrichtung 1 besteht aus einem Tuner 17, einer Steuereinrichtung 36, einem Timer 18, einem MPEG-Decoder 19 sowie einem Bus-Controler 21. Das Fernsehgerät weist neben der Internetkommunikationseinrichtung 4 eine sogenannte Scart-Matrix 24, eine Steuereinrichtung 23, sowie einen Bildschirm 37 auf. Die Internetkommunikationseinrichtung 4 ist über eine Anschlußleitung 8 mit einem Telefonanschluß 20 koppelbar. Die Speichereinrichtung 3 weist eine Festplatte 16 sowie einen Bus-Controler 22 auf. Der Bus-Controler 22 des Speichermediums 3 ist über Signalflußleitungen 34, 35 mit dem Bus-Controler 21 der Empfangseinrichtung 1 gekoppelt. Darüberhinaus bestehen Signalflußleitungen 38 vom Bus-Controler 21 der Empfngseinrichtung 1 zum MPEG-Decoder 19 sowie zwischen der Scart-Matrix 24 und dem Bildschirm 37 eine Signalflußleitung 39 und zwischen dem Internetkommunikationsgerät 4 und der Scart-Matrix 24 eine Signalflußleitung 50.

Im folgenden soll der Signalfluß der Nutzdaten zur Programmauswahl und nach der Programmauswahl, d.h. zur Wiedergabe von ausgewählten Programmbeiträgen näher erläutert werden. Die Signalflußpfade sind dabei jeweils durch dicke Signallinien gekennzeichnet. Über die Internetkommunikationseinrichtung 4 erfolgt, wie bereits im Zusammenhang mit Fig. 1 bis 3 beschrieben, eine Verbindungsaufnahme zur virtuellen Videothek. Von dort wird über die Internetkommunikationseinrichtung 4 ein Signalfluß 50 zur Scart-Matrix 24 und von dort weiter ein Signalfluß 39 zum Bildschirm 37 des Fernsehgeräts 2. Auf dem Bildschirm 37 des Fernsehgeräts wird beispielsweise eine Programmauswahlseite dargestellt, wie dies im Zusammenhang mit Fig. 2 gezeigt und beschrieben ist. Anschließend erfolgt mittels der in Fig. 4 aus Gründen der Übersichtlichkeit nicht dargestellten Fernbedienung sowie mittels des TV-Controlers 23 eine Auswahl eines bestimmten gewünschten Programmbeitrags, der über den Rückkanal der Telefonleitung 8 an die virtuelle Videothek übertragen wird. Diese sendet hierauf Informationen, beispielsweise über die Kosten des ausgewählten Programmbeitrags sowie den Zeitpunkt der Übertragung bzw. einen entsprechenden Code der eine Betrachtung des ansonsten verschlüsselten Films ermöglicht. Eine entsprechende Timer-Information, die ebenfalls übertragen wird, wird im Timer 18 der Empfangseinrichtung 1 eingelesen und gespeichert. Aufgrund dieser Timerinformation wird der Tuner 17 der Empfangseinrichtung 1 zum gewünschten Zeitpunkt in Empfangbereitschaft geschaltet, so daß er den Signalfluß 9 des gewünschten Programmbeitrags rechtzeitig empfängt und über die Signalflußleitung 51 und den Bus-Controler 21 der Empfangseinrichtung 1 sowie den Bus-Controler 22 des Speichermediums 3 über die Signalflußleitungen 34 und 52 weiter an die Speichereinrichtung 16, beispielsweise eine Festplatte, weiteneitet. Die Festplatte 16 hat beispielsweise eine Speicherkapazität von 2000 MByte. Unter der Annahme, daß ein Spielfilm von zwei Stunden Dauer, der im MPEG-Datenformat übertragen wird, einen Speicherbedarf von zwei GByte benötigt. Die Übertragungsgeschwindigkeit eines Films vom Dienstleisteanbieter über einen Satelliten zur Empfangseinrichtung 1 beträgt beispielsweise 40 MBits/s. Daraus folgt für einen Film mit einer Länge von 2 Stunden eine Übertragungszeit von ca. 5 Minuten. Über einen Satellitentransponder wäre somit die Übertragung von 12 Filmen in einer Stunde möglich. Der Betreiber könnte somit beispielsweise auf zwei Transpondern ca. 48 Filme innerhalb einer Zeitspanne von zwei Stunden anbieten. wobei beispielsweise aktuelle Filme häufiger zur Übertragung bereitstehen, um damit dem Kunden ein besseres Angebot zu ermöglichen. Die Wiedergabe des auf der Festplatte 16 gespeicherten Programmbeitrags ist dadurch möglich, daß über die Signalflußleitung 53 und den Bus-Controler 22 sowie die Signalflußleitung 35 und den Bus-Controler 21 sowie die Signalflußleitung 38 an den MPEG-Decoder 19 weitergeleitet werden. Von dort gelangen die nunmehr decodierten Videoinformationen über die Signalflußleitung 33 und 39 an den Bildschirm 37.

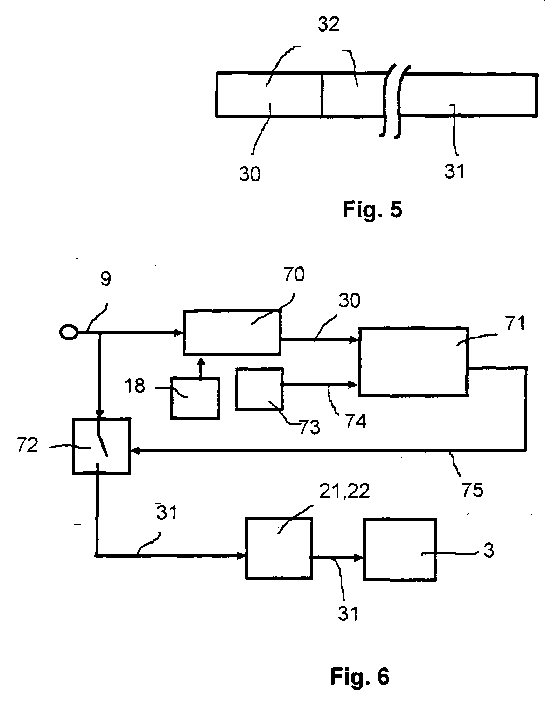

Fig. 5 zeigt eine schematische Darstellung eines übertragenen Teilnehmersignals nach Programmauswahl. Das Teilnehmersignal 32 besteht aus einem Kennungssignal 30, welches beispielsweise Titel etc. des ausgewählten Programmbeitrags enthält. Die eigentlichen Nutzdaten 31 befinden sich im anschließenden Nutzdatensignal. Die so übertragenen Signaldaten werden auf der Festplatte des Speichermediums 3 (vgl. Fig. 1, Fig. 4) gespeichert wobei über die Kennungsdaten 30 ein schneller und übersichtlicher Zugriff auf die gespeicherten Daten möglich ist.

Fig. 6 zeigt ein Ausführungsbeispiel des Signalverarbeitungsteils eines Teilnehmerendgeräts, der zur Auswertung eines Identifikationscodes 30 vogesehen ist. Hierzu dient bei dem in Fig. 6 dargestellten Ausführungsbeispiel eine Auswerteeinrichtung 70, der ein Empfangssignal 9, beispielsweise einer Satellitenantenne zugeführt wird. Weiterhin ist ein Timer 18 vorgesehen, der die Auswerteeinrichtung 70 ansteuert. Am Ausgang der Auswerteeinrichtung 70 liegt, soweit dieses erfolgreich detektiert wurde, ein Identifikationscode 30 vor, der einer Vergleichseinrichtung 71 zugeführt wird. Die Vergleichseinrichtung 71 vergleicht den detektierten Identifikationscode 30 mit einem in einen Speicher 73 gespeicherten Vergleichscode 74. Ein am Ausgang der Vergleichseinrichtung 71 ermitteltes Steuersignal 75 steuert eine Schalteinrichtung 72, an deren Eingang das Eingangssignal 9 anliegt. Der Ausgang der Schalteinrichtung 72 ist mit einer Steuereinrichtung 21, 22 verbunden, die ein Nutzdatensignal 31 bei geschlossener Schalteinrichtung 72 an eine Speichereinheit 3 weiterleitet.

Das in Fig. 6 dargestellte Blockschaltbild zeigt die in Fig. 4 aus Gründen der Übersichtlichkeit nicht mehr dargestellte Vorrichtung, die sicherstellt, daß die von der virtuellen Audio- und/oder Videothek übertragenen Nutzdaten 31 auch jeweils lediglich an den Teilnehmer übermittelt bzw. beim Teilnehmer in dessen Speichereinrichtung 3 gespeichert werden, dessen Vergleichscode 74 mit dem von der virtuellen Audio- und/oder Videothek übertragenen Identifikationscode 30 zur Identifikation eines Teilnehmers übereinstimmt. Hierzu wird das Empfangssignal 9 nach Aktivierung durch den Timer 18 mittels der Auswerteeinrichtung 70 daraufhin ausgewertet, ob ein Identifikationscodesignal im Empfangssignal 9 enthalten ist. Das so detektierte Identifikationssignal 30 wird mit dem im Speicher 73 gespeicherten Vergleichscode 74 verglichen. Bei Übereinstimmung, die mit Hilfe der Vergleichseinrichtung 71 ermittelt wird, erfolgt mit Hilfe des Steuersignals 75 eine Ansteuerung der Schalteinrichtung 72. Die Schalteinrichtung 72 schaltet im Falle einer Übereinstimmung des Vergleichscodes 74 und des detektierten Identifikationscodes 30 das Empfangssignal 9 als Nutzdaten 31 an die Kontrolleinrichtungen 21, 22, die die Nutzdaten 31 an den Speicher 3 weiterleiten, wie dies im Zusammenhang mit Fig. 4 bereits erläutert wurde.

Zusammenfassend besteht die Erfindung somit aus einem Verfahren zur Realisierung einer virtuellen Audio- und/oder Videothek, die im wesentlichen aus einem senderseitig angeordneten Speichermedium mit auf dem Speichermedium gespeicherten Audio- und/oder Videobeiträgen und aus einer Steuereinrichtung zur Steuerung des Zugriffs auf die gespeicherten Audio- und/oder Videobeiträge besteht. Senderseitig, d.h. vom Betreiber der virtuellen Audio- und/oder Videothek wird eine Programmangebotsauswahl an ein empfangsseitig angeordnetes Endgerät über einen Hinkanal übertragen. Mittels des Endgeräts wird über einen Rückkanal ein Identifikationscode zur Identifikation des Endgeräts und ein Programmauswahlcode zur Kennzeichnung eines empfangsseitig ausgewählten Audio- und/oder Videobeitrags an die senderseitig vorgesehene virtuelle Videothek übertragen. Die virtuelle Videothek überträgt im Ansprechen auf ein von einem Endgerät empfangenen Programmauswahlcode zur Kennzeichnung eines ausgewählten ausgewählten Audio- und/oder Videobeitrags über ein Übertragungsmedium den ausgewählten Audio- und/oder Videobeitrag in codierter Form als Nutzdaten an das Endgerät zusammen mit einem Kennungscode zur Kennzeichnung des Endgeräts, das den Audio-und/oder Videobeitrag angefordert hat. Der Kennungscode wird mit einem empfangsseitig gespeicherten Vergleichscode verglichen, wobei bei Übereinstimmung des Kennungscodes und des Vergleichscodes die Nutzdaten in einer empfangsseitig angeordneten Speichereinrichtung gespeichert werden. Der Teilnehmer kann somit den so gespeicherten Video- und/oder Audiobeitrag nach der Übertragung jederzeit über einen entsprechenden Decoder wiedergeben. Ein bei bisherigen realen Audio- oder Videotheken erforderliches Ausleihen eines Videofilmes und anschließende Rückgabe entfällt. Außerdem ist die Akzeptanz einer Teilnahme an einer derartigen virtuellen Audio- und/oder Videothek wesentlich erhöht, da der Teilnehmer lediglich für die Beiträge, beispielsweise Filme oder Musikstücke bezahlt, die er auch tatsächlich sehen bzw. hören will. Als Speichermedium kommen dabei sämtliche möglichen Speichermedien wie Festplatte, digitaler Videorecorder, beschreibbare CD oder Bildplatte in Frage.

## Patentansprüche

1. Verfahren zur Realisierung einer virtuellen Audio- und/oder Videothek (6), die im wesentlichen aus einem senderseitig angeordneten Speichermedium (25) mit auf dem Speichermedium (25) gespeicherten Audio- und/oder Videobeiträgen und aus einer Steuereinrichtung (26) zur Steuerung des Zugriffs auf die gespeicherten Audio- und/oder Videobeiträge besteht, bei dem senderseitig eine Programmangebotsauswahl (12) über ein erstes Übertragungsmedium (8) an ein empfangsseitig angeordnetes Endgerät (1, 2) übertragen wird, bei dem mittels des Endgeräts (1, 2) ein Identifikationscode (61) zur Identifikation des Endgeräts (1, 2) und ein Programmauswahlcode (62) zur Kennzeichnung eines empfangsseitig ausgewählten Audio- und/oder Videobeitrags (15) an die senderseitig vorgesehene virtuelle Audio- und/oder Videothek (6) übertragen wird, bei dem die Steuereinrichtung (26) der virtuellen Videothek (6) im Ansprechen auf ein von einem Endgerät (1, 2) empfangenen Programmauswahlcode (62) zur Kennzeichnung eines ausgewählten Audio- und/oder Videobeitrags (15) den ausgewählten Audio- und/oder Videobeitrag (15) in codierter Form als Nutzdaten (31) an das Endgerät (1, 2) zusammen mit einem Kennungscode (30) zur Kennzeichnung des Endgeräts (1, 2) und/oder des Teilnehmers, das der den Audio-und/oder Videobeitrag (15) angefordert hat, übertragen wird, bei dem der Kennungscode (30) mit einem empfangsseitig gespeicherten Vergleichscode (74) verglichen wird und bei dem bei Übereinstimmung des Kennungscodes (30) und des Vergleichscodes (74) die Nutzdaten (31) in einer empfangsseitig angeordneten Speichereinrichtung (3) gespeichert werden.

2. Verfahren nach Anspruch 1,
**dadurch gekennzeichnet,**
daß die Programmangebotsauswahl (12) über Internet von der virtuellen Audio- und/oder Videothek (6) an die empfangsseitig angeordneten Endgeräte (1, 2) übertragen wird, und daß auch die Daten eines Programmauswahlsignales (60) zur Auswahl eines Audio- und/oder Videobeitrags (15) über Internet vom Ort des Teilnehmers an die virtuelle Audio- und/oder Videothek (6) übertragen wird.

3. Verfahren nach einem der Ansprüche 1 oder 2,
**dadurch gekennzeichnet,**
daß bei einer Auswahl eines Audio- und/oder Videobeitrags (15) die Teilnehmernummer und/oder eine dem Teilnehmer zugeordnete Identifikationsnummer (61) an die virtuelle Audio- und/oder Videothek (6) übertragen wird.

4. Verfahren nach einem der Ansprüche 1 bis 3,
**dadurch gekennzeichnet,**
daß die virtuelle Audio- und/oder Videothek (6) dem Teilnehmer nach erfolgter Auswahl eines Audio- und/oder Videobeitrags (15) Zusatzinformationen übermittelt, die die Kosten des Teilnehmers und/oder die Zeit betreffen, wann der ausgewählte Audio- und/oder Videobeitrag (15) zum Teilnehmer übertragen wird.

5. Verfahren nach einem der Ansprüche 1 bis 4
**dadurch gekennzeichnet,**
daß die von der virtuellen Audio- und/oder Videothek (6) übertragenen Audio- und/oder Videobeiträge als MPEG-Datenstrom an das Endgerät (1, 2) übertragen werden.

6. Verfahren nach einem der Ansprüche 1 bis 5,
**dadurch gekennzeichnet,**
daß über einen empfangsseitig vorgesehenen Timer (18) die Empfangseinrichtung (1) des Endgeräts (1, 2) nach Auswahl eines Audio- und/oder Videobeitrags für den Zeitpunkt der Übertragung des ausgewählten Audio- und/oder Videobeitrags auf Empfangsbereitschaff programmiert wird.

7. Gerät der Unterhaltungselektronik (1, 2), insbesondere Fernsehgerät, Set-Top Box und/oder Internetkommunikationseinrichtung oder eine Kombination hiervon mit einer Sendeempfangseinrichtung (4) zum Empfang einer von einer virtuellen Audio- und/oder Videothek (6) aus senderseitig gesendeten Programmangebotsauswahl (12) und zum Senden eines Programmauswahlcodes (62) zur Kennzeichnung eines empfangsseitig ausgewählten Audio- und/oder Videobeitrags (15) und eines Identifikationscodes (61) zur Identifikation des Endgeräts (1, 2) an die senderseitig vorgesehene virtuelle Audio- und/oder Videothek (6), mit Mitteln (17) zum Empfang des ausgewählten Audio- und/oder Videobeitrag (15) in codierter Form als Nutzdaten (31) von der virtuellen Videothek (6) im Ansprechen auf den von von dem Gerät der Unterhaltungselektronik (1, 2) empfangenen Programmauswahlcode (61) zur Kennzeichnung eines ausgewählten Audio- und/oder Videobeitrags (15) und mit Mitteln (71) zum Vergleich eines von der virtuellen Audio- und/oder Videothek gesendeten Kennungscodes (30) zur Kennzeichnung des Geräts der Unterhaltungselektronik (1, 2) mit einem im Gerät der Unterhaltungselektronik (1, 2) gespeicherten Vergleichscodes (74) und mit einer mit dem Gerät (1, 2) koppelbaren Speichereinrichtung (3) zur Speicherung der von der virtuellen Audio- und/oder Videothek empfangenen Nutzdaten (31) bei Übereinstimmung des Kennungscodes (30) und des Vergleichscodes (74).

8. Gerät nach Anspruch 7
**dadurch gekennzeichnet,**
daß das Gerät (1, 2, 3) eine Internet-Kommunikationseinrichtung (4) aufweist, die zum Empfang der von der virtuellen Audio- und/oder Videothek (6) als Hinkanal übertragenen Programmauswahl und auch als Rückkanal zur Auswahl eines Audio- und/oder Videobeitrags (15) an die virtuelle Audio- und/oder Videothek (6) vorgesehen ist.

9. Gerät nach einem der Ansprüche 7 oder 8,
**dadurch gekennzeichnet,**
daß das Gerät eine Steuereinrichtung (21) aufweist, die bei einer Auswahl eines Audio- und/oder Videobeitrags (15) die im Gerät oder auf einer Berechtigungskarte gespeicherte Teilnehmemummer und/oder eine dem Teilnehmer zugeordnete Identifikationsnummer (61) an die virtuelle Audio- und/oder Videothek (6) überträgt.

10. Gerät nach einem der Ansprüche 7 bis 9,
**dadurch gekennzeichnet,**
daß das Gerät (1, 2) einen Speicher aufweist, an den nach erfolgter Auswahl eines Audio- und/oder Videobeitrags (15) von der virtuellen Audio- und/oder Videothek (6) dem Teilnehmer Zusatzinformationen übermittelt werden, die die Kosten des Teilnehmers und/oder die Zeit betreffen, wann der ausgewählte Audio- und/oder Videobeitrag (15) zum Teilnehmer übertragen wird.

11. Gerät nach einem der Ansprüche 7 bis 10,
**dadurch gekennzeichnet,**
daß das Gerät einen MPEG-Decoder (19) aufweist, das zur Decodierung der von der virtuellen Audio- und/oder Videothek (6) als MPEG-Datenstrom übertragenen Audio- und/oder Videobeiträge vorgesehen ist.

12. Gerät nach einem der Ansprüche 7 bis 11,
**dadurch gekennzeichnet,**
daß das Gerät einen Timer (18) aufweist, der die Empfangseinrichtung (1) des Endgeräts (1, 2) nach Auswahl eines Audio- und/oder Videobeitrags für den Zeitpunkt der Übertragung des ausgewählten Audio- und/oder Videobeitrags auf Empfangsbereitschaft programmiert.
